# EUROPÄISCHE PATENTSCHRIFT

(11) **EP 1 606 957 B1**
(45) Veröffentlichungstag und Bekanntmachung des Hinweises auf die Patenterteilung: **13.07.2011**
(21) Anmeldenummer: 04715297.0
(22) Anmeldetag: 27.02.2004
(51) Int. Cl.: H04Q 1/14

(54) **PATCHPANEL ZUR MONTAGE AN EINER WAND ODER IN EINEM BAUGRUPPENTRÄGER**
PATCH PANEL FOR MOUNTING ON A WALL OR IN A SUBRACK
PANNEAU DE CABLAGE POUR MONTAGE SUR UNE PAROI OU DANS UN CHASSIS

(30) Priorität: 25.03.2003 DE 10313358
(43) Veröffentlichungstag der Anmeldung: 21.12.2005
(73) Patentinhaber: Siemens Enterprise Communications GmbH & Co. KG, 81379 München (DE)
(72) Erfinder: VERDING, Markus, 45279 Essen (DE)
(74) Vertreter: Fritzsche, Thomas
(86) Internationale Anmeldenummer: PCT/EP2004/001964
(87) Internationale Veröffentlichungsnummer: WO 2004/086777

(56) Entgegenhaltungen:
- WO-A-99/07163
- US-A- 5 497 444
- US-A- 5 575 665
- US-A- 5 647 763

## Beschreibung

### Technisches Gebiet

Die Erfindung betrifft ein Patchpanel zur Montage an einer Wand oder in einem Baugruppenträger, mit einem Gehäuseteil das durch Befestigungswinkel an stirnseitigen Enden montierbar ist und eine Frontblende aufweist, die als Umsteckfeld zum Rangieren von Daten ausgebildet ist, die auf Leitungen eines ankommenden Kabels anstehen, auf Leitungen, die durch Anschlusseinrichtungen an der Frontblende anschließbar sind.

### Stand der Technik

Ein Patchfeld ist ein Umsteckfeld, das dem Anschluss, dem Verteilen und Rangieren von Verbindungen dient. Die Frontblende eines Patchpanels beinhaltet die Anschlussdosen für abgehende Kabel. Jeder Anschlussdose im Tertiärbereich ist auf dem Umsteckfeld eine eigene Steckverbindung zugeordnet. Patchpanel gibt es in verschiedenen Ausführungen. Es sind Patchpanel in Verwendung, die sich sowohl hinsichtlich der Anzahl, als auch hinsichtlich der Ausbildung der Steckeinrichtungen unterscheiden. In der Regel besteht das Umsteckfeld aus in Reihe liegenden Anschlussdosen der gleichen Kategorie. Die Anschlussdosen können beispielsweise RJ-Anschlussdosen, BNC-Anschlussdosen oder Anschlüsse für Glasfaserkabel sei. Neben der Hauptfunktion, dem Rangieren von Daten, erleichtert ein Patchpanel im Fehlerfall durch Anschluss von Überwachungs- und Analysegeräten die Fehlersuche.

Ein solches Patchpanel zum Rangieren von Daten, die auf Leitungen eines ankommenden Kabels anstehen, auf Anschlusseinrichtungen, an die Anwender anschließbar sind, ist beispielsweise aus der DE 197 34 422 C2 bekannt. Es besteht aus einem Montagerahmen, auf dem die Anschlusseinrichtungen angeordnet sind und ankommende Kabel in einem Schirmgehäuse angeschlossen sind. Jeder Steckvorrichtung ist ein eigenes Schirmelement zugeordnet, wodurch eine sichere Datenrangierung ermöglicht wird.

Das Dokument US-A-564773 (ARNOLD ET AL) 15 Juli 1997 (1997-07-15) offenbart auch ein Patchpanel zur Montage an einer Wand oder in einem Baugruppenträger.

Bei der Gehäuseinstallation von Telekommunikationseinrichtungen sind Patchpanels häufig in Verteilerschränken in einem Verteilerraum untergebracht. Die Montage erfolgt in 19"-Baugruppenträgern gemäß dem Rastermaß.

Daneben gibt es auch Anwendungsfälle einfacherer Bauart, bei denen die Verwendung eines Baugruppenträgers zu aufwendig ist. In diesen Fällen wird das Patchpanel nicht in einem Schrank sondern an der Wand montiert. Beide Montagemöglichkeiten erfordern jeweils eine entsprechend ausgebildete Gehäusebauform oder entsprechend ausgebildete Befestigungswinkel. Unterschiedliche Gehäusebauformen bzw. Befestigungswinkel sind aber sowohl hinsichtlich der Herstellungskosten, als auch hinsichtlich der Lagerhaltungskosten mit einem erhöhten Aufwand verbunden.

### Darstellung der Erfindung

Der Erfindung liegt die Aufgabe zu Grunde, ein Patchpanel so anzugeben, dass es sowohl zur Montage an einer Wand, als auch zur Montage in einem Baugruppenträger gleichermaßen geeignet ist und dessen Herstellung und Montage einfach möglich ist.

Diese Aufgabe wird durch ein Patchpanel mit den Merkmalen des Patentanspruchs 1 gelöst. Auf vorteilhafte Ausgestaltungen der Erfindung nehmen die Unteransprüche Bezug.

Gemäß der Erfindung ist an jedem stirnseitigen Ende ein Befestigungswinkel vorgesehen, der eine Gabelfederklinke aufweist, die in Führungsnuten, die zur steckbaren Aufnahme der Gabelfederklinke an den stirnseitigen Enden an gegenüberlie-genden Seitenwänden des Gehäuseteils ausgebildet sind, frontseitig und rückseitig einsteckbar ist und durch korrespondierende Rastmittel einrastbar ist. Der umsteckbare Befestigungswinkel ermöglichte es, dass eine Gehäusekonstruktion, sowohl zur Wandmontage, als auch zur Baugruppenträgermontage, geeignet ist. Je nach Anwendungsfall wird der Befestigungswinkel bei der Montage vor Ort entweder von der Frontseite oder von der Rückseite auf das Gehäuse aufgeschoben. Beim Aufschieben rastet der Befestigungswinkel ein und ist in aufgeschobener Stellung fest mit dem Gehäuse verbunden. Eine Lagerhaltung für unterschiedliche Gehäuseausführungen bzw. unterschiedliche Befestigungswinkel entfällt. Die Herstellung ist mit vergleichsweise geringen Kosten möglich. Die universelle Einsetzbarkeit ermöglicht es auch, dass ein zuvor an einer Wand montiertes Patchpanel bei einer späteren Erweiterung der Anlage einfach in einem Baugruppenträger montiert werden kann.

In einer bevorzugten Ausführungsform sind die korrespondierenden Rastmittel durch Rasthaken gebildet. Diese Rasthaken sind jeweils an den Schenkeln der Gabelfederklinke und am Nutgrund der Führungsnut angeformt. Beim Einstecken der Gabelfederklinke werden die Schenkel in der Nut geführt bis ihre Rasthaken mit den Raasthaken der Führungsnut einschnappen. Aus dieser eingeschnappten Stellung sind die Rasthaken unter Zuhilfenahme eines Werkzeugs wieder lösbar. Sowohl Befestigungswinkel als auch Gehäuse sind universell einsetzbar.

Eine einfache Konstruktion ergibt sich, wenn die Führungsnuten jeweils an einer Seitenwand gehäuseaußenseitig zwischen der Frontblende und der Rückwand des Gehäuseteils durchgehend verlaufend ausgebildet sind, wobei die Rasthaken in der Führungsnut vom Nutgrund in Form eines Keils vorspringen.

In einer bevorzugten Ausführungsform ist in einem frontseitigen Abstand ein frontseitiges Rasthakenpaar und in einem rückseitigen Abstand ein rückseitiges Rasthakenpaar ausgebildet. Dadurch werden zwei getrennte Einschnappvorrichtungen für Wand- bzw Baugruppenmontage gebildet. Wenn die Rasthaken der Gabelfederklinke innenseitig an den Schenkeln angeformt sind, dann greift in einer eingeschobenen Stellung das Rasthakenpaar der Gabelfederklinke jeweils in das rückseitige bzw. frontseitige Rasthakenpaar der Führungsnut ein. Der Befestigungswinkel ist gleichermaßen für eine Montage des Patchpanels an einer Wand, wie auch für eine Montage in einem Baugruppenträger verwendbar. Für beide Montagearten muss nur ein Lagertyp vorrätig gehalten werden, was hinsichtlich der Logistik von Vorteil ist.

Das Aufschieben des Befestigungswinkels ist besonders einfach, wenn die Gabelfederklinke und /oder die Rasthaken der Führungsnut mit einer Anlaufschräge versehen sind. Beim Aufschieben des Befestigungswinkels werden die beiden Schenkel der Gabelfederklinke seitlich ausgelenkt. In der Montageendstellung des Befestigungswinkels liegen die beiden Schenkel der Gabelfederklinke an den Seitenwänden des Gehäuseteils federnd an. Der Befestigungswinkel ist stabil mit dem Gehäuseteil verbunden. Aus dieser eingerasteten Lage sind die beiden Schenkel der Gabelfederklinke unter Zuhilfenahme eines Werkzeugs entfernbar.

Bevorzugt wird ein Gehäuseteil, das aus einer frontseitigen und aus einer rückseitigen Gehäuseschale besteht. Bei entsprechender Anordnungen des jeweiligen Rasthakenpaares auf der rückseitigen bzw. frontseitigen Gehäuseschale ist es möglich, die rückseitige bzw. frontseitige Gehäuseschale abzunehmen. Auf diese Weise wird ein Zugang zu den Einrichtungen im Inneren des Patchpanels geschaffen, ohne dass dabei die Befestigung an der Wand beziehungsweise die Befestigung in einem Baugruppenträger gelöst werden muss.

Beide Gehäuseschalen können auf einfache Weise durch eine Schnappverbindung, die jeweils an aufeinander zugewandten Seiten der Gehäusehälften angeordnet ist, verbunden werden. Wenn die Führungsnuten in einem abgekröpften Abschnitt an der Stirnseite des Gehäuses angeordnet sind, wird konstruktiv die Voraussetzung geschaffen, dass in einer aufgeschobenen Position der Befestigungswinkel bündig mit den Seitenwänden bzw. mit der Frontplatte abschließt. Dies ist von Vorteil, wenn mehrere Patchpanels aneinander angrenzend montiert werden, da ein geringer Einbauraum benötigt wird. Eine Anlagenerweiterung ist leicht möglich.

Bevorzugt wird eine Ausführungsform des Patchpanels bei der die frontseitige Gehäuseschale an zumindest einem Ende ein angeformtes Wandstück aufweist, das im zusammengebauten Zustand in die rückseitige Gehäuseschale ragt. Dieses Wandstück kann vorteilhaft als Klemmvorrichtung für ankommende Kabel ausgebildet werden. Dazu weist das Wandstück zumindest eine Ausnehmung auf, die mit einer Noppenkontur versehen sein kann. Das ankommende Kabel ist zwischen Wandstück und Rückwand geklemmt und die Anschlüsse an den Steckbuchsen der Frontblende zugentlastet.

Wenn das Gehäuseteil aus Kunststoff in Spritzgusstechnik hergestellt wird, hat es sich als vorteilhaft erwiesen, wenn die Führungsnuten der frontseitigen bzw. rückseitigen Gehäuseschale hinsichtlich der Frontblende senkrecht verlaufenden und mit rechteckförmigen Querschnitt ausgebildet sind. Das Spritzgusswerkzeug ist dadurch einfach aufgebaut. Die Spritzgussteile sind leicht entformbar. Die Fertigung in Spritzugußtechnik ist insbesondere bei großen Stückzahlen besonders günstig. Es ist aber auch denkbar, dass Gehäuse und Befestigungswinkel als Biegestanzteile aus Blech gebildet sind.

Bei der Montage in einem Baugruppenträger ist es günstig, wenn die Breite der Frontblende und die Breite des Befestigungswinkels einer Höheneinheiten entspricht. Dadurch ist eine Montage gemäß dem Rastermaß möglich.

Das Umsteckfeld an der Frontblende des Gehäuseteils kann verschieden ausgebildete Anschlusseinrichtungen aufweisen. Am Umsteckfeld können Steckbuchsen für elektrische und / oder optische Kabel vorgesehen sein.

### Kurzbeschreibung der Zeichnung

Die Erfindung wird nachstehend an Hand der Zeichnungen näher erläutert. Es zeigen:
- Figur 1: das erfindungsgemäße Patchpanel zur Montage an ei- ner Wand.
- Figur 2: das erfindungsgemäße Patchpanel zur Montage in ei- nem Baugruppenträger.
- Figur 3: das erfindungsgemäß Patchpanel zur Montage in einem Baugruppenträger in einer explodierten Darstellung.
- Figur 4: eine Detaildarstellung des erfindungsgemäßen Patch- panels mit Blick auf ein stirnseitiges Ende.
- Figur 5: eine Schnittdarstellung gemäß der Linie A-A in Fi- gur 2.

### Ausführung der Erfindung

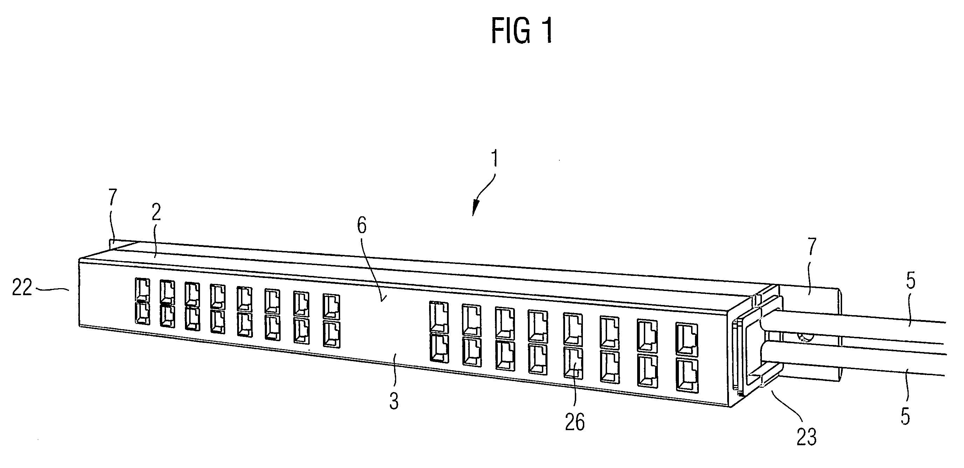

Die Figur 1 zeigt eine perspektivische Ansicht des erfindungsgemäßen Patchpanels 1, das zur Wandmontage eingerichtet ist. Zum Rangieren von Daten, die auf Leitungen an ankommenden Kabel 5 anstehen, ist die Frontblende 3 des Patchpanels 1 als Umsteckfeld 6 ausgebildet. Das Umsteckfeld 6 besteht aus einer in Reihe angeordneter Anschlussdosen 26. die Anschlussdosen sind im Ausführungsbeispiel als RJ45-Dosen ausgebildet, in welche RJ-45-Steckeinrichtungen abgehender Kabel, die in Figur 1 nicht näher dargestellt werden, einsteckbar. An jedem stirnseitigen Ende 22 und 23 des Gehäuseteils 2 ist jeweils ein Wandbefestigungswinkel 7 vorgesehen, der von der Rückseite aufgesteckt ist. An jedem Winkel 7 sind Bohrungen für Schrauben vorgesehen, durch die das Patchpanel an einer Wand montiert werden kann.

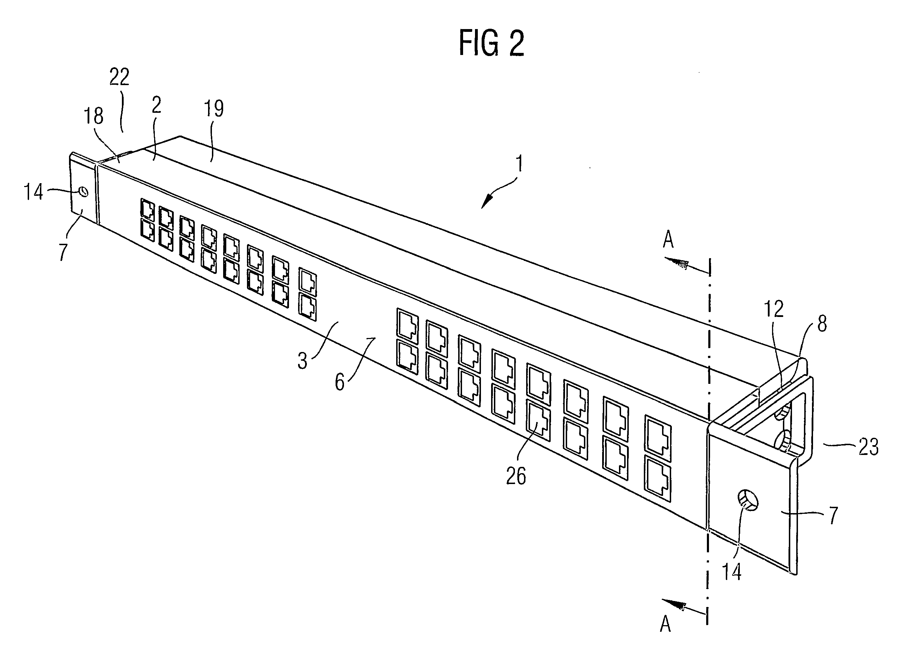

Für die Montage in einem Baugruppenträger werden die Befestigungswinkel 7 frontseitigen aufgesteckt, was in der perspektivischen Ansicht der Figur 2 gezeigt ist.

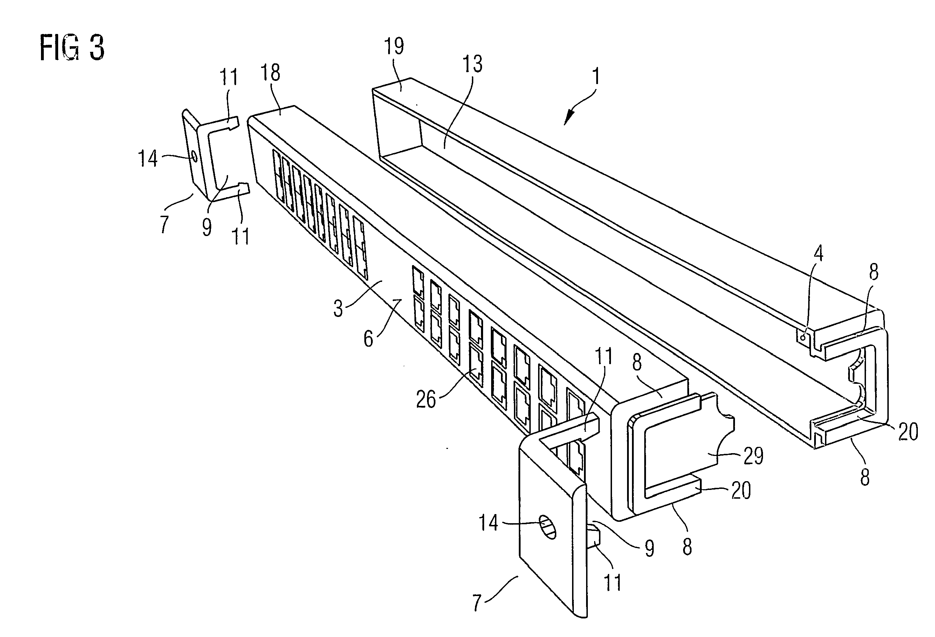

Die Figur 3 zeigt das erfindungsgemäße Patchpanel 1 in einer Explosionsdarstellung vor dem Zusammenbau für eine Montage in einem Baugruppenträger. Das Gehäuse des Patchpanels besteht aus einer frontseitigen Gehäuseschale 18 und aus einer rückseitigen Gehäuseschale 19. Durch eine Schnappverbindung 4 sind diese beiden Gehäuseschalen 18 und 19 miteinander verbindbar. An den stirnseitigen Enden der vorderen Gehäuseschale 18 sind Befestigungswinkel 7 vorgesehen. Jeder Befestigungswinkel 7 ist an einem gehäuseseitigen Winkelteil als Gabelfederklinke 9 ausgebildet. Die Schenkel 11 jeder Gabelfederklinke 9 zeigen in Richtung der Führungsnuten 8, die zur Aufnahme der Gabelfederklinke 9 an einem abgekröpften Ansatz 20 an der Gehäuseschale 18 angeformt sind. Auch an der rückseitige Gehäuseschale 19 ist stirnseitig ein abgekröpfter Ansatz 20 mit Führungsnuten 8 ausgebildet.

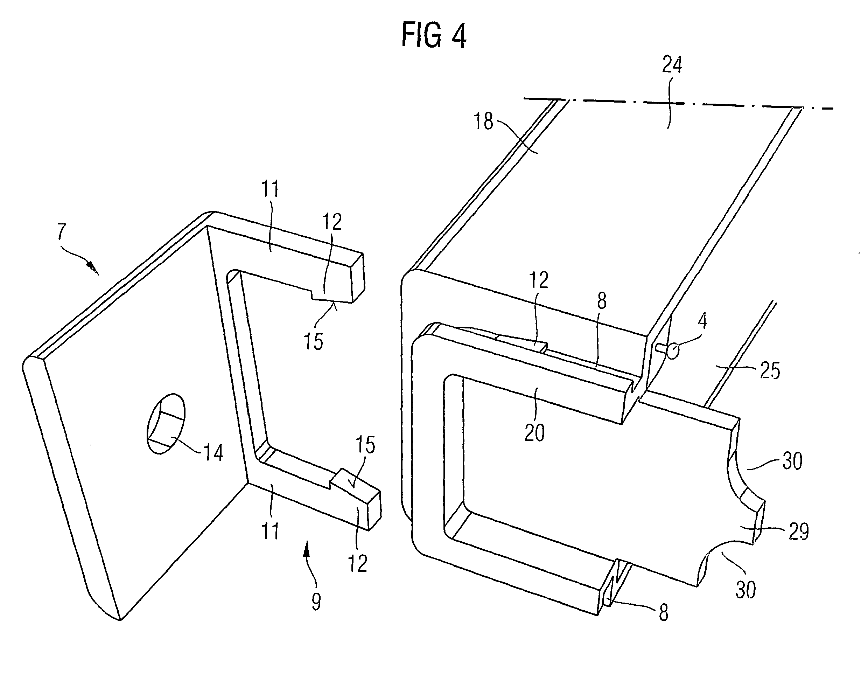

Um das Patchpanel zur Montage in einem Baugruppenträger vorzubereiten, wird jeder Befestigungswinkel 7 in Richtung auf die Frontblende 3 in die Führungsnuten 8 eingeschoben. Wie aus der Darstellung in Figur 4 besser zu erkennen ist, ist jeder Schenkel 11 mit Rasthaken 12 versehen, die jeweils eine Auflaufschräge 15 besitzen. Beim Einschieben kommt diese Auflaufschräge 15 mit einer korrespondierenden Auflaufschräge eines Rasthakens 12 in der Führungsnut 8 zur Anlage. Das Einschieben bewirkt, dass jeder Schenkel 11 nach außen ausgelenkt wird, bis er in einer Montageendstellung einhakt. Durch diese Rastverbindung sind die beiden Befestigungswinkel 7 am vorderen Gehäuseteil 18 befestigbar. Nach dem Zusammenbau mit der rückseitigen Gehäuseschale 19 kann das Patchpanel 1 durch Schrauben in den Bohrungen 14 in einem Baugruppenträger befestigt werden.

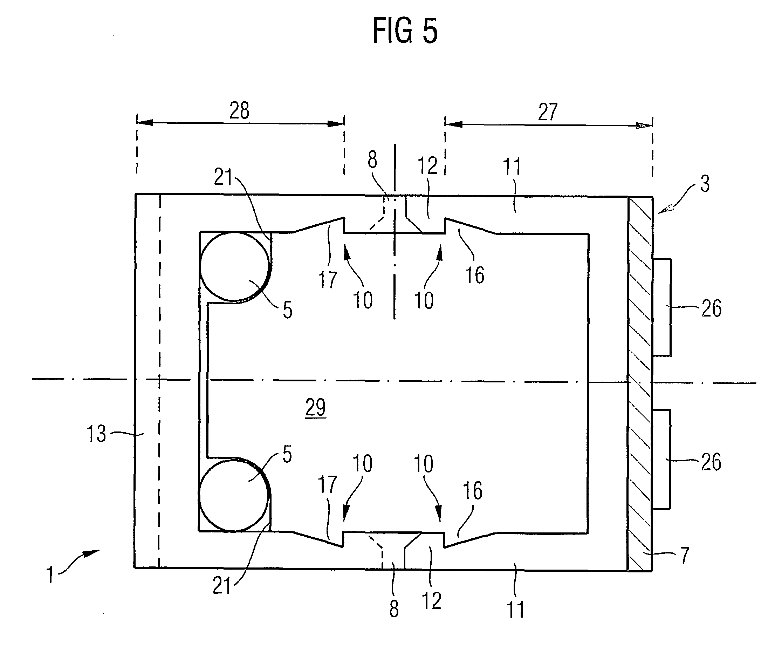

Die Figur 5 zeigt das erfindungsgemäße Patchpanel in einer Schnittdarstellung gemäß der Linie A-A der Figur 2. Die Rasthaken 12 der Schenkel 11 sind in ein frontseitiges Rasthakenpaar 16 eingehakt. Das Rasthakenpaar 16 weist zur Frontplatte 3 einen Abstand 27 auf, der genauso groß ist wie ein Abstand 28 zwischen einem rückwandseitigen Rasthakenpaar 17 und der Rückwand 13. Dadurch ist es möglich, dass der Befestigungswinkel 7 sowohl von der Vorderseite als auch von der Rückseite in die Führungsnuten 8 eingeschoben werden kann und jeweils in einer Endstellung mit dem jeweiligen Rasthakenpaar 16 bzw 17 einhakt. In Figur 5 ist die rückwandseitige Befestigungsstellung strichliert dargestellt. Aus der Schnittzeichnung ist auch sehr gut erkennbar, dass in zusammengefügtem Zustand die beiden Gehäuseschalen 18 und 19 mittels des Wandstückes 29 eine Klemmvorrichtung 21 für die Kabel 5 bilden. Das Wandstück 29 ist am vorderseitigen Gehäuseteil 18 angeformt und schafft eine Zugentlastung für die Kabel 5. Der Kabelaustritt ist bei einer Wandmontage in vertikaler Lage bevorzugt unten, kann aber auch oben angeordnet sein.

## Patentansprüche

1. Patchpanel zur Montage an einer Wand oder in einem Baugruppenträger, mit einem Gehäuseteil (2), das durch Befestigungswinkel (7) an stirnseitigen Enden (22, 23) montierbar ist und eine Frontblende (3) aufweist, die als Umsteckfeld (6) zum Rangieren von Daten ausgebildet ist, die auf Leitungen eines ankommenden Kabels (5) anstehen, auf Leitungen, die durch Anschlusseinrichtungen (26) an der Frontblende anschließbar sind,
**dadurch gekennzeichnet,**
- **dass** an jedem stirnseitigen Ende (22,23) ein Befestigungswinkel (7) vorgesehen ist, der eine Gabelfederklinke (9) mit Schenkeln (11) aufweist,
- **dass** zur steckbaren Aufnahme der Schenkel (11) an jedem stirnseitigen Ende(22,23) an gegenüberliegender Seitenwänden (24,25) des Gehäuseteils (2) gehäuseaußenseitig zwischen der Frontblende (3) und einer Rückwand (13) durchgehend verlaufend Führungsnuten (8) ausgebildet sind,
- **dass** die Schenkel (11) frontseitig und rückseitig in die Führungsnuten (8) einsteckbar und durch korrespondierende Rastmittel (10) einrastbar sind.

2. Patchpanel nach Anspruch 1, **dadurch gekennzeichnet, dass** die korrespondierenden Rastmittel (10) durch Rasthaken (12) gebildet sind, die an Schenkeln (11) der Gabelfederklinke (9) und am Nutgrund jeder Führungsnut (8) angeformt sind.

3. Patchpanel nach Anspruch 2, **dadurch gekennzeichnet, dass** jeder Rasthaken (12) keilförmig ausgebildet ist.

4. Patchpanel nach Anspruch 2 oder 3, **dadurch gekennzeichnet, dass** in jeder Führungsnut (8) in einem frontseitgen Abstand (27) ein frontseitiges Rasthakenpaar (16) und in einem rückseitigen Abstand (28) ein rückseitiges Rasthakenpaar (17) ausgebildet ist.

5. Patchpanel nach Anspruch 4, **dadurch gekennzeichnet, dass** die Rasthaken (12) der Gabelfederklinke (9) innenseitig an den Schenkeln (11) angeformt sind und in einer frontseitigen Montageendstellung in das frontseitige Rasthakenpaar (16) und in einer rückseitigen Montageendstellung in das rückseitige Rasthakenpaar (19) der Führungsnut (8) eingreifen.

6. Patchpanel nach Anspruch 5, **dadurch gekennzeichnet, dass** der frontseitige Abstand (27) und der rückseitige Abstand (28) gleich groß gewählt ist.

7. Patchpanel nach einem der Ansprüche 2 bis 6, **dadurch gekennzeichnet, dass** die Rasthaken (12) der Gabelfederklinke (9) und /oder die Rasthaken (12) der Führungsnut (8) mit einer Auflaufschräge (15) versehen sind, so dass beim Einstecken der Gabelfederklinke die beiden Schenkel (11) seitlich ausgelenkt werden und in eingerasteter Stellung unter seitlicher Druckausübung an den Seitenwänden (24, 25) anliegen.

8. Patchpanel nach einem der vorstehenden Ansprüche, **dadurch gekennzeichnet, dass** das Gehäuseteil (2) aus einer frontseitigen Gehäuseschale (18) und aus einer rückseitigen Gehäuseschale(19) besteht.

9. Patchpanel nach Anspruch 8, **dadurch gekennzeichnet, dass** die beiden Gehäuseschalen (18,19) durch eine Schnappverbindung (4) verbindbar sind.

10. Patchpanel nach Anspruch 9, **dadurch gekennzeichnet, dass** die Führungsnuten (8) in einem von der Außenkontur des Gehäuseteils einspringenden abgekröpften Ansatz (29) der stirnseitigen Enden (22,23) der Gehäuseschalen (18, 19) angeordnet sind.

11. Patchpanel nach einem der Ansprüche 9 oder 10, **dadurch gekennzeichnet, dass** an der frontseitigen Gehäuseschale (18) an zumindest einem Ende ein Wandstück (29) angeformt ist, das in zusammengebautem Zustand in die rückseitige Gehäuseschale (19) ragt.

12. Patchpanel nach Anspruch 11, **dadurch gekennzeichnet, dass** das Wandstück (29) Ausnehmungen (30) aufweist, die in zusammengefügtem Zustand jeweils mit der rückseitigen Gehäuseschale (19) eine Klemmvorrichtung für ankommende Kabel (5) bilden.

13. Patchpanel nach einem der vorstehenden Ansprüche, **dadurch gekennzeichnet, dass** die Führungsnuten (8) senkrecht zur Ebene der Frontblende (3) verlaufen und einen rechteckförmigen Querschnitt aufweisen.

14. Patchpanel nach einem der vorstehenden Ansprüche, **dadurch gekennzeichnet, dass** die Breite der Frontblende und die Breite des Befestigungswinkels gleich groß, besonders bevorzugt gleich einer Höheneinheit, gewählt ist.

15. Patchpanel nach einem der vorstehenden Ansprüche, **dadurch gekennzeichnet, dass** die Anschlusseinrichtungen (26) des Umsteckfeldes (6) zum Anschluß von elektrischen und/oder von optischen Leitungen ausgebildet sind.

16. Patchpanel nach einem der vorstehenden Ansprüche, **dadurch gekennzeichnet, dass** die Gabelfederklinke (9) und das Gehäuseteil (2) aus polymerem Werkstoff in Spritzgusstechnik hergestellt sind.

## Claims

1. Patch panel for mounting on a wall or in a subrack, with a housing part (2) which can be mounted on ends (22, 23) located on respective faces and has a front cover (3) which is formed as a plug panel (6) for routing data waiting on lines of an incoming cable (5) to lines which can be connected by connection devices (26) on the front cover, **characterised in that**
- on each face end (22, 23) is provided a fixing bracket (7) which has a fork-type spring detent (9) with legs (11),
- to accommodate the plug-fit legs (11), on each face end (22, 23) on opposite side walls (24, 25) of the housing part (2) on the outside of the housing, continuous guide grooves (8) are formed between the front cover (3) and a rear wall (13),
- the legs (11) can be pushed from the front and rear into the guide grooves (8) and engaged by corresponding detent means (10).

2. Patch panel according to claim 1, **characterised in that** the corresponding detent means (10) are formed by engagement hooks (12) which are moulded on the legs (11) of the fork-type spring detent (9) and on the groove base of each guide groove (8).

3. Patch panel according to claim 2, **characterised in that** each engagement hook (12) is formed wedge-shaped.

4. Patch panel according to claim 2 or 3, **characterised in that** in each guide groove (8), a front engagement hook pair (16) is formed at a distance (27) from the front and a rear engagement hook pair (17) is formed at a distance (28) from the rear.

5. Patch panel according to claim 4, **characterised in that** the engagement hooks (12) of the fork-type spring detent (9) are moulded on the inside on the legs (11) and in a final assembly position on the front side, engage in the front engagement hook pair (16) and in a final assembly position on the rear side, engage in the rear engagement hook pair (19) of the guide groove (8).

6. Patch panel according to claim 5, **characterised in that** the distance (27) from the front and the distance (28) from the rear are selected equally large.

7. Patch panel according to any of claims 2 to 6, **characterised in that** the engagement hooks (12) of the fork-type spring detent (9) and/or the engagement hooks (12) of the guide groove (8) are fitted with initial chamfers (15) so that on insertion of the fork-type spring detent, the two legs (11) are deflected sideways and in the engaged position lie on the side walls (24, 25) exerting a lateral pressure.

8. Patch panel according to any of the preceding claims, **characterised in that** the housing part (2) comprises a front side housing shell (18) and a rear side housing shell (19).

9. Patch panel according to claim 8, **characterised in that** the two housing shells (18, 19) can be joined by a snap connection (4).

10. Patch panel according to claim 9, **characterised in that** the guide grooves (8) are arranged in a bent moulding (29), protruding from the outer contour of the housing part on the face ends (22, 23) of the housing shells (18, 19).

11. Patch panel according to any of claims 9 or 10, **characterised in that** on the front housing shell (18), on at least one end, is formed a wall piece (29) which in assembled state protrudes into the rear housing shell (19).

12. Patch panel according to claim 11, **characterised in that** the wall piece (29) has recesses (30) which in the assembled state with the rear housing shell (19) each form a clamping device for incoming cables (5).

13. Patch panel according to any of the preceding claims, **characterised in that** the guide grooves (8) run vertical to the plane of the front cover (3) and have a rectangular cross section.

14. Patch panel according to any of the preceding claims, **characterised in that** the width of the front cover and the width of the fixing bracket are selected equally large, particularly preferably equal to one height unit.

15. Patch panel according to any of the preceding claims, **characterised in that** the connection devices (26) of the plug panel (6) are formed for connection of electric and/or optical lines.

16. Patch panel according to any of the preceding claims, **characterised in that** the fork-type spring detent (9) and the housing part (2) are injection-moulded of polymer material.

## Revendications

1. Panneau de câblage pour montage sur une paroi ou dans un châssis, avec une partie de boîtier (2) qui peut être montée par des angles de fixation (7) sur des extrémités côté frontal (22, 23) et présente un panneau frontal (3) réalisé comme un panneau de connexion (6) destiné à classer des données en place sur des lignes d'un câble d'entrée (5), sur des lignes pouvant être raccordées par des dispositifs de raccordement (26) au panneau frontal, **caractérisé en ce que**
- un angle de fixation (7) est prévu sur chaque extrémité frontale (22, 23), lequel présente un cliquet à ressort fourchu (9) doté de branches (11),
- des rainures de guidage (8) sont réalisées s'étendant en continu sur le côté extérieur du boîtier entre le panneau frontal (3) et une paroi arrière (13) en vue de loger de manière enfichable des branches (11) sur chaque extrémité côté frontal (22, 23) sur des parois latérales opposées (24, 25) de la partie de boîtier (2),
- les branches (11) peuvent être enfichées côté frontal et côté arrière dans les rainures de guidage (8) et encliquetées par des moyens d'encliquetage correspondants (10).

2. Panneau de câblage selon la revendication 1, **caractérisé en ce que** les moyens d'encliquetage correspondants (10) sont constitués par des crochets d'encliquetage (12) formés sur des branches (11) du cliquet à ressort fourchu (9) et sur le fond de chaque rainure de guidage (8).

3. Panneau de câblage selon la revendication 2, **caractérisé en ce que** chaque crochet d'encliquetage (12) est réalisé en forme de coin.

4. Panneau de câblage selon la revendication 2 ou 3, **caractérisé en ce que** dans chaque rainure de guidage (8), une paire de crochets d'encliquetage (16) côté frontal est réalisée à une distance côté frontal (27) et une paire de crochets d'encliquetage (17) côté arrière est réalisée à une distance côté arrière (28).

5. Panneau de câblage selon la revendication 4, **caractérisé en ce que** les crochets d'encliquetage (12) du cliquet à ressort fourchu (9) sont formés côté intérieur sur les branches (11) et s'engagent dans une position finale de montage côté frontal dans la paire de crochets d'encliquetage côté frontal (16) et dans une position finale de montage côté arrière dans la paire de crochets d'encliquetage côté arrière (19) de la rainure de guidage (8).

6. Panneau de câblage selon la revendication 5, **caractérisé en ce que** la distance côté frontal (27) et la distance côté arrière (28) sont choisies de même grandeur.

7. Panneau de câblage selon l'une quelconque des revendications 2 à 6, **caractérisé en ce que** les crochets d'encliquetage (12) du cliquet à ressort fourchu (9) et/ou les crochets d'encliquetage (12) de la rainure de guidage (8) sont pourvus d'un biais d'entrée (15) de sorte que lors de l'enfichage du cliquet à ressort fourchu, les deux branches (11) soient déviées latéralement et reposent dans une position encliquetée en exerçant une pression latérale sur les parois latérales (24, 25).

8. Panneau de câblage selon l'une quelconque des revendications précédentes, **caractérisé en ce que** la partie de boîtier (2) se compose d'une coque de boîtier (18) côté frontal et d'une coque de boîtier (19) côté arrière.

9. Panneau de câblage selon la revendication 8, **caractérisé en ce que** les deux coques de boîtier (18, 19) peuvent être reliées par un assemblage à encliquetage (4).

10. Panneau de câblage selon la revendication 9, **caractérisé en ce que** les rainures de guidage (8) sont disposées dans une saillie (29) coudée rentrant par le contour extérieur de la partie de boîtier, des extrémités côté frontal (22, 23) des coques de boîtier (18, 19).

11. Panneau de câblage selon l'une quelconque des revendications 9 ou 10, **caractérisé en ce qu'**une partie de paroi (29) qui pénètre, à l'état assemblé, dans la coque de boîtier côté arrière (19), est formée sur la coque de boîtier (18) côté frontal sur au moins une extrémité.

12. Panneau de câblage selon la revendication 11, **caractérisé en ce que** la partie de paroi (29) présente des évidements (30) formant un dispositif de serrage pour des câbles d'entrée (5) à l'état assemblé respectivement avec la coque de boîtier côté arrière (19).

13. Panneau de câblage selon l'une quelconque des revendications précédentes, **caractérisé en ce que** les rainures de guidage (8) s'étendent perpendiculairement au plan du panneau frontal (3) et présentent une section rectangulaire.

14. Panneau de câblage selon l'une quelconque des revendications précédentes, **caractérisé en ce que** la largeur du panneau frontal et la largeur de l'angle de fixation sont choisies de même grandeur, de manière particulièrement préférée égales à une unité de hauteur.

15. Panneau de câblage selon l'une quelconque des revendications précédentes, **caractérisé en ce que** les dispositifs de raccordement (26) du panneau de connexion (6) sont réalisés pour le raccordement de lignes électriques et/ou optiques.

16. Panneau de câblage selon l'une quelconque des revendications précédentes, **caractérisé en ce que** le cliquet à ressort fourchu (9) et la partie de boîtier (2) sont fabriqués en un matériau polymère par moulage par injection.
